Europäisches Patentamt

European Patent Office

Office européen des brevets

(19)

(11) Publication number: **0 225 934**
**A1**

(12) **EUROPEAN PATENT APPLICATION**

(21) Application number: **85116017.6**

(22) Date of filing: **16.12.85**

(51) Int. Cl.⁴: **B01D 53/04**

(43) Date of publication of application:
**24.06.87 Bulletin 87/26**

(84) Designated Contracting States:
**DE FR GB**

(71) Applicant: **Health Technologies, Inc.**
**253 Roosevelt Drive**
**Derby, CT 06418(US)**

(72) Inventor: **Lee, Harold J.**
**475 Burnt Plains Road**
**Milford, CT 06460(US)**

(74) Representative: **Kern, Wolfgang Dipl.-Ing. et al**
**Patentanwälte Tischer, Kern & Brehm**
**Albert-Rosshaupter-Strasse 65**
**D-8000 München 70(DE)**

(54) **Method and apparatus for separating gases and gaseous mixtures by employing molecular sieves.**

(57) There is disclosed method and apparatus for purging a molecular sieve with high efficiency. After a gas concentration cycle -such as removing nitrogen from air -the adsorbed molecules must be removed. This is accomplished by valving off the outlet end of the sieve and opening the inlet end. The pressure entrapped within the sieve causes an explosive decompression which purges a major amount of the adsorbed gas molecules. The process is completed by limited countercurrent flow of product gas through the sieve.

Fig. 1.

EP 0 225 934 A1

## Method and apparatus for separating gases and gaseous mixtures by employing molecular sieves

The field of this invention is the fractionation of gaseous mixtures employing molecular sieves, more particularly it pertains to the concentration of oxygen from air.

The use of molecular sieves for the separation of gaseous mixtures is well known. Molecular sieves are crystalline zeolites. The crystalline structure of molecular sieves is characterized by a large number of small cavities interconnected by still smaller pores. Such molecular sieves selectively adsorb certain components of a gaseous mixture. By proper selection of the particular molecular sieve, many different gaseous components may be selectively adsorbed. The present invention is directed primarily to the concentration of oxygen from air. For this purpose, a satisfactory material for adsorbing nitrogen is available from the Union Carbide Corporation as zeolite Type 5A having a nominal pore diameter of 5Å.

In United States Patent 4,194,891 of Earls et al., there is disclosed a method of oxygen concentration utilizing multiple beds of molecular sieves and a rapid pressure swing adsorption technique. That patent, and the references cited therein, disclose a number of known techniques of gaseous separation employing one or more beds of molecular sieve material and various methods of purging such beds of their adsorbed material.

One of the major objectives of the present invention is to improve the energy efficiency of the purge step. By so doing, smaller and more efficient oxygen concentrators may be obtained for medical and industrial use.

Currently, there are three principal methods of purging a molecular sieve as follows:

1. A vacuum may be applied to a contaminated sieve to remove adsorbed impurities and prepare the sieve for another gas separation cycle. A small amount of the desired end product gas may be employed in conjunction with the vacuum. The basic reason for employing vacuum is to minimize the amount of the end product gas required in the purging step.

2. The contaminated molecular sieve may be purged by employing relatively high volumes of the desired end product gas. A common method is to employ an orifice for controlling flow from the end product gas container while other companion sieves are supplying end product gas to the container. This method of purging requires relatively high volumes of end product gas, thereby lowering the overall operating efficiency.

3. The most common purge system, employed particularly in concentrating oxygen from the air, is to close off the contaminated sieve by valving, while generating a high pressure in the end product gas container as rapidly as possible. Upon achieving the desired pressure, the purge valve of the contaminated sieve is opened simultaneously with the air inlet valve of a previously purged sieve. Most of the oxygen produced by the previously purged sieve is forced into the end product cylinder as the pressure in the product cylinder drops to a minimum due to the flow of end product gas into the contaminated sieve being purged. This is the most inefficient of the three purge methods.

It should be noted that the one feature common to all of the three prior art purging techniques is the immediate application of external energy flowing from an outside source into the chamber containing a sieve upon commencement of the purge after its removal from the adsorption process.

The "pool" of energy already contained and stored within the chamber containing the contaminated sieve bed has not been employed by the prior art for purging purposes. This "pool" of potential energy results from the fact that the interior of the chamber containing the contaminated sieve bed is initially under pressure exceeding ambient atmospheric pressure before the purging cycle begins. In addition, there is the energy of the heat of adsorption of the contaminant gas.

In accordance with the present invention, a molecular sieve which has become contaminated is removed from the adsorption cycle by valving each end closed. Energy (potential energy) in the form of pressure exceeding atmospheric pressure is thereby trapped within the sieve bed. Also, the energy from heat of adsorption is thereby trapped in the sieve bed. Thereafter, a purge valve at the inlet end of the chamber containing the bed is opened suddenly, permitting the container gas to suddenly decompress to the atmosphere or to vacuum. This sudden decompression of the interior of the chamber containing the contaminated sieve bed permits the potential energy stored therein, plus the energy of the heat of adsorption, suddenly to change into kinetic energy.

The action is analogous to the sudden release of a compressed spring. The released spring immediately accelerates to high velocity. The potential energy stored in the previously compressed spring is suddenly transformed into kinetic energy, represented by high velocity of the spring itself.

Similarly, when the purge valve at the inlet of the chamber containing the contaminated sieve bed is suddenly opened, the previously pressurized gas, containing the heat of adsorption, springs into high velocity flowing out through the open purge valve. For example, if the adsorbed gas in the contaminated sieve bed is nitrogen which is under pressure exceeding ambient atmospheric pressure before the purge valve is suddenly opened, then this nitrogen suddenly springs into high velocity, everywhere flowing through the chamber toward the open purge valve and out through this purge valve. This sudden concersion of the potential energy of the previously pressurized nitrogen into the kinetic energy of rapidly flowing nitrogen I have found to be extremely effective is dislodging nitrogen molecules from the pores and interstices of the contaminated bed. The contaminated bed is thus caused to decontaminate itself during the first portion of the purge cycle by the sudden change of potential energy to kinetic energy. The internal pressure of this bed is allowed to drop to atmospheric pressure and the high velocity flow of the contaminant gas is allowed to self-purge sufficiently long to drop almost to zero flow. Then the purge cycle is completed by a short period of application of vacuum or by a short period of high velocity product gas flow or a short period of high velocity gas flow plus applied vacuum. Then the purge cycle is completed, and the operation of the sieve bed immediately swings over to the fractionation (product gas generation) cycle.

During the first portion of the purge cycle, while the contaminated sieve bed is undergoing the novel, sudden self-purging decompression, the pressure in the end product gas container is advantageously built up to the highest desired product gas pressure level that will not allow a frontal breakthrough in purity. In other words, it is desired that the product gas, during back-flushing, shall sweep through the sieve bed as an unbroken front without leaving any significant by-passed pockets of contaminant gas.

When this predetermined chosen optimum level is attained in the product container, then a high velocity jet of the product gas is blasted into the self-purged sieve whose internal pressure is very nearly down to atmospheric pressure level. This blast comprises product gas molecules, all travelling at high velocity so that each molecule of the product gas has a high level of kinetic energy. In effect, this blast (which may last from one to several seconds, depending on the desired product output and product purity) is a frontal velocity wave assault of high kinetic energy product gas molecules sweeping through the partially decontaminated sieve in whose interstices are located residual contaminant gas molecules that are substantially stationary (low kinetic energy), because decompression has already fully occurred. I have found that this brief blast of high velocity product gas molecules is very effective, under these circumstances, in dislodging the residual low kinetic energy contaminant gas molecules while vectoring the dislodged molecules out through the inlet. In other words, this frontal assault blast is very effective and efficient as a sweeping agent in clearing out the contaminant gas. The momentum of this frontal assault blast is effectively directed toward the inlet, and the dislodged contaminant gas molecules are efficiently vectored out through the inlet. Only a minimum of random motion is produced in the contaminant gas molecules when the frontal assault blast hits them.

The features and advantages of the invention may be understood from the following detailed description and the accompanying drawings, which are, however, to be regarded as merely illustrative.

Fig. 1 is a schematic diagram of a molecular sieve oxygen concentration system in accordance with this invention employing two molecular sieves;

Fig. 2 is a schematic diagram of another molecular sieve oxygen concentration system in accordance with the invention employing a single molecular sieve;

Fig. 3 is an enlarged cross-section of the inlet and of a molecular sieve;

Fig. 4 is a diagrammatic longitudinal cross section of the molecular sieve of Fig. 3 from one end to the other; and

Figs.5A, B, C, D, and E illustrate changes in pressure gradient along the length of the molecular sieve of Fig. 4 at the end of the concentration cycle and in the moments of sudden decompression during the first portion of the purge cycle, showing the resultant high velocity flow, and in the blast frontal wave purging portion of the purge cycle.

A more efficient method for concentrating oxygen from air could be employed to advantage in a number of applications. One such application would be in the medical field. Many victims of chronic obstructive pulmonary disease, such as emphysema, require the use of supplemental oxygen on a continuing basis. Efficient, small, lightweight oxygen concentrators would make truly portable units available to the patents. Such units could be powered by battery, either self-contained or, for example, through an automobile cigarette lighter socket. Such patients would, in many cases, be able to be gainfully employed or travel and thereby lead essentially normal lives, rather than being confined by connections to a tank of oxygen or to large stationary oxygen concentrator installations.

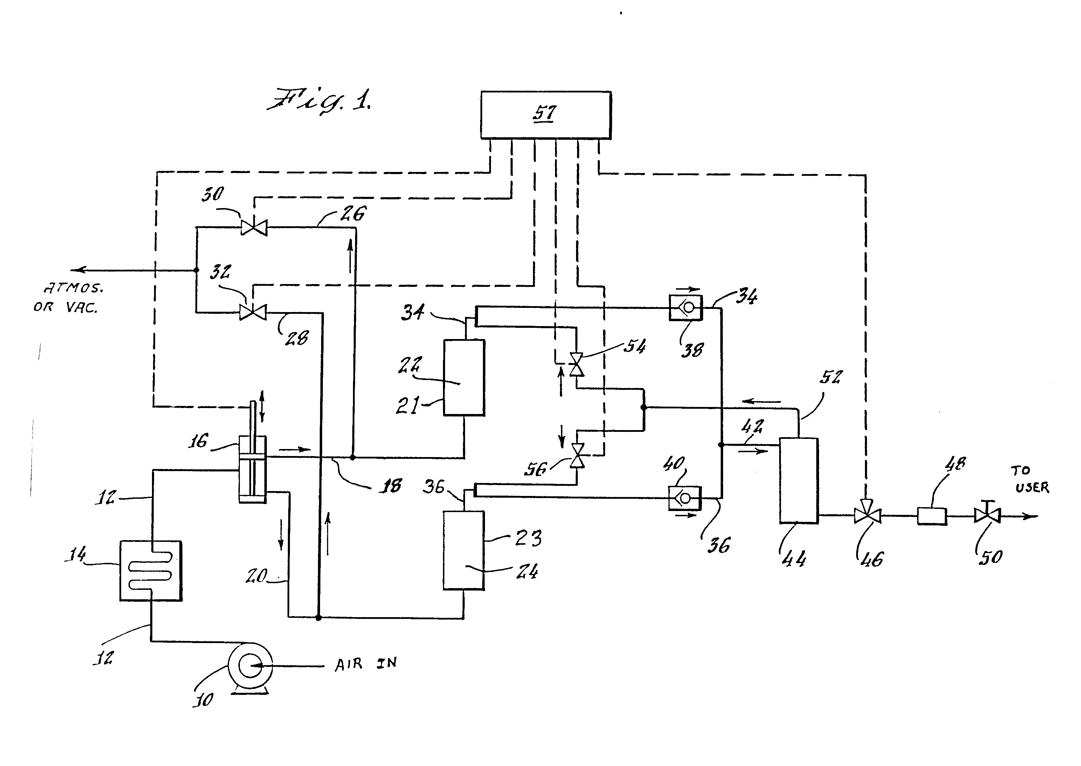

Fig. 1 illustrates a system in accordance with the present invention including an air compressor 10 which inducts air as shown by the arrow and sends it through a conduit 12, which may include a heat exchanger 14 for removing the heat of compression, to a three way selector valve 16. Selector valve 16 is operable to either of two positions whereby air from conduit 12 may be switches into either of inlet lines 18 or 20 connected, respectively, to the inlet ends of chambers 21 and 23 containing respective molecular sieve beds 22, 24. Also connected to the inlet ends of the chambers 21, 23 containing sieve beds 22, 24 are purge lines 26, 28, which pass, respectively, through purge exhaust valves 30, 32 to atmosphere or vacuum. The outlet ends of the chambers 21, 23 containing molecular sieve beds 22, 24 are connected, respectively, through outlet conduits 34, 36, containing check valves 38, 40 to an end product gas, i.e., oxygen, supply line 42 connected to an end product gas cylinder 44. Oxygen, or other end product gas, is supplied by the cylinder 44 through a pressure regulator 46, a filter 48, and a flow control valve 50 to an end user.

A purge line 52 from the end product gas cylinder 44 is connected, through a pair of purge inlet valves 54, 56, to the outlet ends of the chambers 21, 23 containing sieve beds 22, 24.

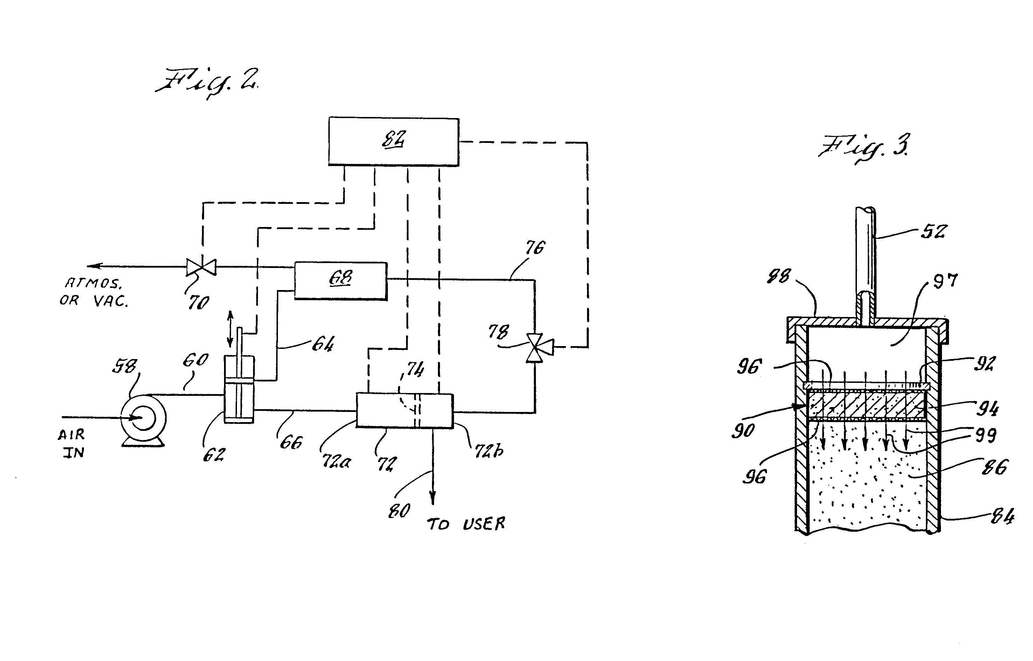

Fig. 3 illustrates the internal construction of the outlet end of a representative chamber and molecular sieve bed. It includes a tbular casing 84 containing the sandlike molecular sieve particles 86 and having an end cap 88. The sieve particles 86 are retained by a filter assembly 90 held in place by a snap ring 92. Filter assembly 90 is a "sandwich" of felt 94 between perforate or screenlike supporting layers such as expanded perforated material discs 96. Other materials may also be used. The felt forms the equivalent of a plurality of small, parallel, passages 99 between the headspace 97 under cap 88 and the sieve particles 86.

It will be understood that the method of this invention may be employed for the separation of many different gaseous mixtures. However, for purposes of illustration, an adsorption cycle for the apparatus of Fig. 1 will be described in connection with the concentration of oxygen from air. Air containing approximately 21% oxygen, with the remainder being well over 78% nitrogen, enters compressor 10 which passes it through conduit 12 and heat exchanger 14 to the selector valve 16. When the selector valve is in its indicated position, flow continues through inlet line 20 while inlet line 18 is blocked. Purge exhaust valve 32 is closed and, accordingly, air is forces into the molecular sieve bed 24. As air continues to be injected into the inlet end of bed 24, the oxygen component passes substantially without hindrance, but the nitrogen molecules are adsorbed by the pores of the molecular sieve. Accordingly, oxygen, having a purity in excess of 90%, is forced out of the exit end of molecular sieve bed 24 and passes through check valve 40 and lines 36, 42 into the oxygen cylinder 44. The pressure within the cylinder 44 may be maintained at approximately 20 psig and is withdrawn therefrom through the pressure regulator 46, the filter 48, and the flow control valve 50 into, for example, a nasal cannula worn by the user.

Gradually the molecular sieve bed 24 will become substantially filled with adsorbed nitrogen molecules and, at this point, the selector valve 16 is switched to its other position, causing compressed air to flow into the molecular sieve bed 22 and continue therethrough in the same fashion. With the cessation of flow into the molecular sieve bed 24, the check valve 40 will immediately seat, preventing backup flow from the product cylinder 44 into the bed. It will now be apparent that at this juncture the system includes the chamber 23 containing molecular sieve bed 24, changed to substantially full pressure, and that this gas pressure represents potential energy which has been put into the chamber 23 by the air compressor 10. At this juncture the chamber 23 also contains energy resulting from the heat of adsorption of the nitrogen in the sieve bed 86. In accordance with the present invention, the purge exhaust valve 32 is suddenly opened substantially simultaneously with the operation of the seldctor valve 16. This sudden opening of the purge valve 32 creates a sudden decompression of the gas trapped within the molecular sieve bed 24 through the purge exhaust valve 32 tó atmosphere or vacuum. This advantageous selfpurging decompression period may last for a period of approximately six seconds and, as the energy stored within the bed 24 is suddenly released, the contaminant nitrogen gas suddenly springs into high velocity flowing out through the open purge valve and sweeps with it many of the adsorbed nitrogen molecules contained within the sieve pores. During this self-purging decompression period, the pressure in the oxygen product cylinder 44 is advantageously built up to the highest desired oxygen gas pressure level that will not allow a frontal breakthrough in purity, for example 20 psig pressure.

After the pressure in the molecular sieve bed has dropped to a predetermined level, preferably almost to atmospheric pressure, namely zero psig, and the self-purging flow of the contaminant nitrogen gas has dropped almost to zero flow, the purge inlet valve 56 is opened for a brief period of one to several seconds and admists oxygen from the end product cylinder 44 into the exit end of molecular sieve bed 24 to flow in countercurrent fashion therethrough and out the purge valve 32. The internal pressure in the self-purged sieve bed is now at about zero psig pressure, while the entering end product oxygen is at, for example 20 psig pressure, thereby creating a high velocity blast of the oxygen into the self-purged sieve bed. The felt 94 of filter assembly 90 creates a relatively high flow impedance which limits the volumetric flow rate of purging oxygen. However, the constricted passages through the felt result in relatively high velocities of the oxygen molecules which, accordingly, have a high kinetic energy level, thereby creating a frontal velocity wave assault of high kinetic energy product gas oxygen molecules sweeping through the partially decontaminated sieve bed. The pressure in the end product cylinder is not quite so high as to cause turbulence which would allow a frontal breakthrough in purity. Thus, the high kinetic energy in this unbroken frontal wave of end product oxygen molecules is transmitted to the remaining smaller nitrogen molecules, dislodging and very effectively releasing them from the pores of the sieve. This brief blast of high velocity oxygen completes the decontamination stripping of the molecular sieve bed 24, whereupon valve 56 closes and the bed is once more ready for use.

When the other molecular sieve bed 22 requires regeneration, selector valve 16 and purge outlet valves 30, 32 are actuated to return the molecular sieve bed 24 to its role of concentrating oxygen while the purging of molecular sieve bed 22 begins. The valves may be operated automatically from a controller 57.

One of the advantageous features of this invention is that extreme pressure variations within oxygen cylinder 44 are avoided. The small volumetric flow rate of the purge gas plus the patents' demands are almost wholly offset by the production of the active sieve bed.

In Fig. 2 there is illustrated a system which employs the same type of sudden self-purging decompression flow followed by a brief blast of high velocity oxygen for purging but with only a single molecular sieve bed. In this system a compressor 58 supplies air via conduit 60 and three way selector valve 62 to either of inlet lines 64, 66. Inlet line 64 is connected to the inlet end of a molecular sieve bed 68. The inlet end of bed 68 is also connected through a purge valve 70 to atmosphere or vacuum. The inlet line 66 from selector valve 62 is connected to one end of a pressure swing cylinder 72. The pressure swing cylinder 72 is illustrated as having a free floating piston 74 contained for longitudinal movement within it, however, it will be understood that other devices may be employed. The function of the pressure swing cylinder 72 is to vary the volume at its ends so that the pressure within the two ends are substantially equalized.

A balloon contained within the cylinder 72 and connected to the inlet line 66 would accomplish the same purpose, for example, as the free-floating piston 74. The moving wall of the expanding and contracting balloon is analogous to this free-floating piston.

A line 76 containing a pressure regulator 78 connects the outlet and of the molecular sieve bed 68 with the end 72b of the pressure swing cylinder 72. The volume enclosed within the end 72b of the pressure swing cylinder is supplied to the patient or other user via supply line 80. It could also be connected through a check valve to a patient supply reservoir. Among other things, this would increase the available purging oxygen. A controller 82 is connected to sense the pressures within the ends of the pressure swing cylinder 72 and to operate the valves 62, 70 all as shown schematically by dotted lines.

The operation of the Fig. 2 modification will now be explained. When the selector valve 62 is in its raised position, air is forced by compressor 58 through lines 60, 64 into the inlet end of the molecular sieve bed 68. Purge valve 70 is closed and, accordingly, air passes into the molecular sieve bed 68 and oxygen leaves the bed, as previously explained, through line 76 and pressure regulator 78 and enters the end 72b of pressure swing cylinder 72. As oxygen continues to fill the cylinder 72, it passes to the patient through supply line 80 and the excess pressure forces the piston 74 to the left so as to substantially increase the volume in the righthand end 72b of the cylinder 72.

When molecular sieve bed 68 requires regeneration, the selector valve 62, the purge valve 70, and the pressure regulator valve 78 are all operated substantially simultaneously. With respect to molecular sieve bed 68, the pressure entrapped within it by the closing of line 64 and valve 78 causes a sudden self-purging flow decompression through purge valve 70 to atmosphere. At the same time, the actuation of the selector valve 62 permits the flow of compressed air from the compressor into the lefthand end 72a of pressure swing cylinder 72. This forces the internal piston 74 to the right, thereby continuing the flow of oxygen from the righthand end 72b through supply line 80 to the patient. After the pressure within the self-purging molecular sieve bed 68 has dropped to a preselected level, for example to about atmospheric pressure, the valve 78 is caused to open just enough to permit the same type of high velocity, low volumetric rate, brief blast flow of oxygen from line 76 in countercurrent fashion to complete the regeneration of molecular sieve bed 68 as previously explained.

Inviting attention to Fig. 4, there is shown a diagrammatic longitudinal cross-sectional view of a representative molecular sieve, showing the chamber, for example 21, 23 or 68 with the molecular sieve bed 22, 24 or 86 located within the chamber. The molecular sieve bed is retained at each end by a filter assembly 90.

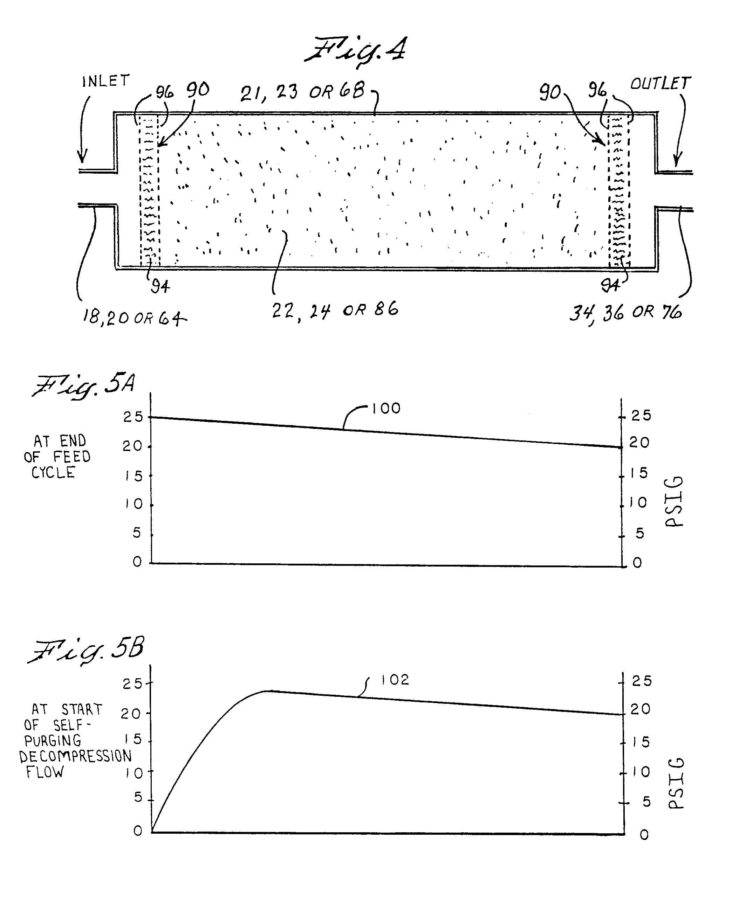

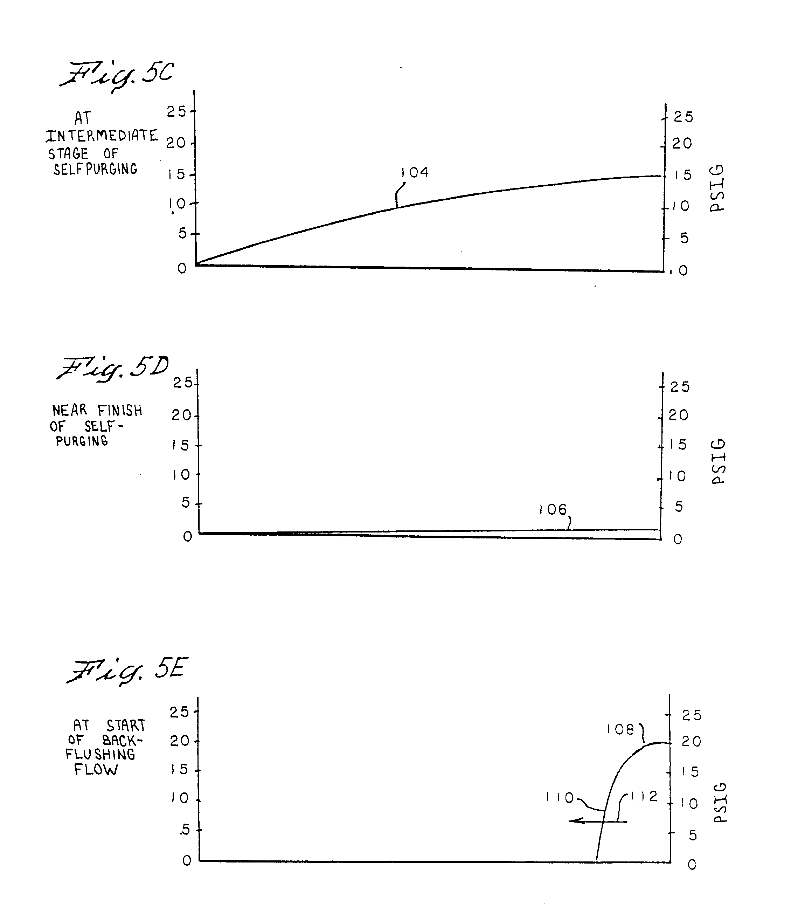

Fig. 5A shows a plot 100 of the pressure within the sieve bed chamber of Fig.4 at the end of the feed cycle. The left side of this plot 100 corresponds with the "INLET" filter assembly side of the chamber of Fig. 4, and the right side of this plot corresponds with the "OUTLET" filter assembly side of that chamber. It is seen that the inlet end of the sieve bed near the inlet filter assembly 90 is at a pressure level of about 25 psig, as supplied by the compressor 10 or 58. The outlet end of the sieve bed near the other filter assembly 90 is at a pressure level of about 20 psig, substantially equal to the pressure in the end product container 44 or 72b. There is a generally uniform gradient (slope) in the pressure 100, decreasing gradually from the inlet end of the sieve bed to the outlet end of the sieve bed.

When the purge valve connected to the inlet end of the sieve bed chamber is opened for initiating the self-purging decompression flow, then the pressure level at the left end of the sieve bed suddenly drops to zero psig. The resulting pressure within the sieve bed suddenly dramatically changes as shown by the curve 102 in Fig. 5B. This pressure plot 102 shows pressure within the sieve bed a brief moment after the self-purging decompression flow has started. It will be appreciated that the steep pressure gradient within the sieve bed toward its inlet end has caused the contaminant gas nitrogen molecules to suddenly spring into high velocity flow toward the inlet. An almost explosive-like sudden energetic self-purging decompression flow of the nitrogen is taking place, exiting through the inlet.

This sudden decompression of the inlet end of the contaminated sieve bed permits the potential energy stored therein, plus the energy of the heat of adsorption, suddenly to change into kinetic energy, producing a high velocity flow of the contaminant nitrogen out through the inlet. This sudden conversion of the energy of the previously pressurized nitrogen into the kinetic energy of rapidly flowing nitrogen I have found to be extremely effective in disloding nitrogen molecules from the pores and interstices of the contaminated bed. The contaminated bed is thus caused to decontaminate itself during a portion of the purge cycle by the sudden change of stored energy to kinetic energy.

If the inlet is suddenly connected to a vacuum, instead of or after connection to atmosphere, then the pressure gradient in Fig. 5B would be even steeper, and the self-purging decompression flow would be even more energetic, exiting through the inlet.

In Fig. 5C is shown a plot 104 of the pressure in the sieve bed at an intermediate stage in the self-purging decompression flow. Energetic self-purging is continuing, and the pressure levels everywhere are dropping.

In Fig. 5D is shown a plot 106 of the pressure in the sieve bed near the conclusion or finish of the self-purging decontamination stages. The pressure levels throughout have now dropped almost to atmospheric pressure, and the self-purging decontamination flow out through the inlet has now dropped almost to zero. The length of time to progress through the stages from Fig. 5A to Fig. 5D is only a few seconds, for example less than six seconds. During this self-purging of Figs. 5A through 5D, the outlet valve 54 or 56 or 78 from the sieve bed chamber (Fig. 4) has been closed so that there has been no drain upon the product accumulator container 44 or 72b except for the continuing steady flow to the user. Thus, the pressure in the product container is at the maximum gas pressure level that will not allow a frontal breakthrough in purity when back-flushed through the sieve bed chamber.

Fig. 5E shows a plot 108 of the pressure in the sieve bed a brief moment after the high velocity blast of the product oxygen gas enters the self-purged sieve, whose internal pressure is now very nearly down to atmospheric pressure level. This blast comprises product gas molecules, all travelling at high velocity so that each molecule of the product gas has a high level of kinetic energy. In effect, this blast (which may last from one to several seconds, depending on the desired product output and product purity) produces a frontal pressure wave assault (steep pressure gradient 110) of high kinetic energy product gas molecules sweeping 112 through the partially decontaminated sieve bed in whose interstices are located residual contaminant nitrogen gas molecules that are substantially stationary (low kinetic energy), because decompression has already fully occurred. I have found that this brief blast 112 of high velocity product gas molecules (oxygen molecules are more massive than nitrogen) is very effective, under these circumstances, in dislodging the residual low kinetic energy contaminant nitrogen gas molecules of lesser mass while vectoring the dislodged molecules out through the inlet. In other words, this frontal assault blast 112 is very effective and efficient as a sweeping agent in clearing out the contaminant gas. The momentum of this frontal assault blast produced by the steep gradient 110 is effectively directed toward the inlet, and the dislodged contaminant gas molecules are efficiently vectored out through the inlet. Only a minimum of random motion is produced in the contaminant gas molecules when the frontal assault blast hits them. In other words, there is no significant frontal breakthrough in purity as the high velocity oxygen gas molecules driven by the steep pressure gradient 110 sweep 112 through the partially decontaminated decompressed sieve bed. A very effective decontamination is achieved, yet only a relatively small proportion of the oxygen product gas has been used.

## Claims

1. A method of separating a gaseous mixture by supplying feed mixture to the first end of an adsorbent bed of crystalline zeolite molecular sieve for selectively adsorbing at least one component while discharging product gas from the second end of the bed to a product gas accumulator and, at the end of the feed supply period, exhausting desorbate gas from the first end of said bed for a purging period, **characterized** by isolating the second end of said adsorbent bed from said product gas accumulator at the beginning of the purging period and permitting the pressure in said bed to drop to substantially atmospheric pressure.

2. Method according to claim 1, **characterized** in that the initial drop of the adsorbent bed pressure to atmospheric during the purging period is followed by evacuation of the bed to a sub-atmospheric pressure to further purge desorbate gas therefrom.

3. Method according to claim 1, **characterized** in that the initial drop of the adsorbent bed pressure to atmospheric during the purging period is followed by releasing product gas from the product gas accumulator into the second end of the bed at a relatively low flow rate and relatively high pressure to substantially complete the purge of adsorbed gas from said bed.

4. A Method of separating air to produce oxygen by a process wherein feed air is supplied to the first end of an adsorbent bed of crystalline zeolite molecular sieve for selectively adsorbing nitrogen while discharging oxygen product gas from the second end of the bed to a product gas accumulator and, at the end of the feed air supply period, exhausting nitrogen desorbate gas from the first end of said bed for a purging period, **characterized** by isolating the second end of said adsorbent bed from said product gas accumulator at the beginning of the purging period and permitting the pressure in said bed to drop to a predetermined level.

5. Method according to claim 4, **characterized** in that thereafter releasing into the second end of said bed from the product gas accumulator, product gas at a relatively low flow rate to substantially completely purge nitrogen from the bed.

6. Method according to claims 4 and 5, **characterized** in that said predetermined level is atmospheric pressure.

7. Method according to claim 6, **characterized** in that the pressure drop is carried out abruptly.

8. Method according to claim 7, **characterized** in that after the pressure in said bed has reached substantially atmospheric pressure, forcing oxygen product gas from said accumulator into the second end of said bed at a relatively low flow rate to substantially completely purge nitrogen from the bed.

9. Method according to claim 7, **characterized** in that the oxygen product gas is forced from said accumulator by switching the feed air supply from said bed to said accumulator at the end of the feed air supply period.

10. A method of separating oxygen from air by employing an adsorbent bed (22, 24; 68) of crystalline zeolite molecular sieve material which selectively adsorbs nitrogen gas molecules and is located in a chamber (21, 23) having an air inlet (18, 20) at one end and an oxygen outlet (34, 36) at the other end wherein during the feeding cycle air is pumped into the inlet of the chamber while allowing oxygen to flow out of the outlet into an oxygen container (44) and wherein during the purge cycle nitrogen gas molecules are purged from the interstices of the molecular sieve, **characterized** in that purging the molecular sieve comprises the steps of:

a) shutting off the outlet (34, 36) of the chamber (21, 23) at the conclusion of the feed cycle;

b) keeping the outlet shut off for a self-purging decompression first portion of the purge cycle;

c) at the conclusion of the feed cycle suddenly opening the inlet (18, 20) to the ambient atmosphere or to vacuum for producing self-purging decompression by allowing the pressure of the nitrogen gas in the interstices of the molecular sieve bed in the chamber (21, 23) plus the heat energy in the chamber resulting from previous adsorption of nitrogen in the sieve bed (22, 24) suddenly to dislodge nitrogen gas molecules and cause the nitrogen gas molecules to begin moving suddenly through the interstices of the sieve bed and out through the inlet (18, 20) into the atmosphere;

d) allowing the inlet (18, 20) to remain open to atmosphere for said first portion of the purge cycle while the outlet is shut off;

e) allowing said self-purging decompression first portion of the purge cycle to continue until the pressure throughout the whole of the chamber (21, 23) has dropped to a level almost equal to atmospheric pressure and until the self-purging decompression flow of nitrogen out through the inlet - (18, 20) has dropped almost to zero flow;

f) during the self-purging decompression first portion of the purge cycle building up the pressure in the oxygen container (44) to the highest predetermined optimum oxygen gas pressure level that will not allow a frontal breakthrough in purity during a second portion of the purge cycle; and

g) when said predetermined optimum oxygen gas pressure level has been attained in the oxygen container (44), and while keeping the inlet - (18, 20) open to the atmosphere or to vacuum, suddenly opening the oxygen container (44) into the outlet (34, 36) of the chamber (21, 23) for a brief period of one to several seconds to produce a sudden blast of oxygen in an essentially unbroken frontal pressure wave sweeping through the fully decompressed molecular sieve bed (22, 24) for effectively and efficiently blasting the residual nitrogen gas molecules to move them out of the interstices of the sieve and to direct them toward the inlet (18,20) so as to cause residual nitrogen gas to flow out through the inlet to complete the purge cycle.

11. Apparatus cor carrying out the method of claim 10, **characterized** by a molecular sieve bed (22, 24; 68) capable of adsorbing nitrogen molecules and passing oxygen molecules and having a first and a second end, an oxygen storage container (44; 72) defining first and second compartments and a partition therebetween movable by gas pressure differential, an air compressor (16; 62), means (57; 82) for directing air from said compressor alternatively into either of the first end of said molecular sieve or the first compartment of said oxygen storage container, valve means (54, 56; 78) for selectively interconnecting the second end of said sieve bed (22, 24;68) with the second compartment of said oxygen storage container (44; 72), means (46, 48, 50; 80) for supplying oxygen from said second compartment to the user and means (30, 32; 70) for selectively venting the first end of said molecular sieve bed (22, 24; 68).

Fig. 1.

_57_

ATMOS.
OR VAC.

AIR IN

TO
USER

0 225 934

Fig. 3

Fig. 2

ATMOS.
OR VAC.

AIR
IN

TO USER

## Fig.4

INLET

OUTLET

96  90    21, 23 OR 68    90    96

94    94

18, 20 OR 64    22, 24 OR 86    34, 36 OR 76

## Fig. 5A

AT END OF FEED CYCLE

PSIG

100

## Fig. 5B

AT START OF SELF-PURGING DECOMPRESSION FLOW

PSIG

102

*Fig. 5C*

AT
INTERMEDIATE
STAGE OF
SELF PURGING

25 — 25
20 — 20
15 — 15   PSIG
10 — 10
5 — 5
0 — 0

104

*Fig. 5D*

NEAR FINISH
OF SELF-
PURGING

25 — 25
20 — 20
15 — 15   PSIG
10 — 10
5 — 5
0 — 0

106

*Fig. 5E*

AT START
OF BACK-
FLUSHING
FLOW

25 — 25
20 — 20
15 — 15   PSIG
10 — 10
.5 — 5
0 — 0

108
110   112

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 203 958 (T.R. SNARSKI) <br> * claim 1; abstract * | 1-3,5 | B 01 D 53/04 |
| A | GB-A-2 091 121 (CRYOPLANTS LTD.) <br> * complete document * | 1,3-11 | |
| A,D | US-A-4 194 891 (D.E. EARLS et al.) <br> * complete document * | | |

TECHNICAL FIELDS SEARCHED (Int. Cl.4)

B 01 D 53/00

The present search report has been drawn up for all claims

| Place of search | Date of completion of the search | Examiner |
|---|---|---|
| BERLIN | 20-01-1987 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82